# EUROPEAN PATENT APPLICATION

(11) **EP 2 759 910 A1**
(43) Date of publication of application: **30.07.2014**
(21) Application number: 12833671.6
(22) Date of filing: 18.09.2012
(51) Int. Cl.: G06F 3/023, G06F 3/02, G06F 3/041

(54) **DEVICE AND METHOD FOR INPUTTING LETTERS IN A MOBILE TERMINAL**

(30) Priority: 21.09.2011 KR 20110095208
(71) Applicant: Kim, Ho-sung, Damyang-gun, Jeollanam-do 517-922 (KR)
(72) Inventor: Kim, Ho-sung, Damyang-gun, Jeollanam-do 517-922 (KR)
(74) Representative: Guéné, Patrick
(86) International application number: PCT/KR2012/007433
(87) International publication number: WO 2013/042910

(57) **Abstract**

The present invention relates to a device and method for inputting letters in a mobile terminal. The letter inputting method according to the present invention comprises the steps of: displaying, on a touch screen, a plurality of letter key buttons to which a plurality of letters are allocated and a plurality of number key buttons to which one number is allocated in a letter input mode; sensing touches on the letter key buttons and the number key buttons; and determining, when the touches on the letter key button and the number key button are sensed, the letter selected from among the plurality of letters allocated to the touched letter key button on the basis of the number allocated to the touched number key button.

## Description

### [Technical Field]

The present disclosure relates to a mobile terminal, more particularly to a device and method for inputting letters in a mobile terminal.

### [Background Art]

Due to industrial development of various electronic and communication technologies, mobile terminals have become widely used, and in order to satisfy user demand, terminals have been functionally diversified, while becoming smaller and lighter.

With the tendency toward compactness and light weight, in the case of mobile terminals, space for allocating key buttons for inputting letters therein is limited, forcing a plurality of letters to be allocated to a single key button. Thus, in order to input letters excluding a letter listed first on the key button, among a plurality of letters allocated to a single key button, users need to press the key button repeatedly by the number corresponding to the respective order at which the letter is listed, which increases the time required to input letters and the number of times the key button is operated.

An example of a related art attempting to solve the above problem is Korean Laid-Open Publication No. 10-2010-0109375 (dated October 8, 2010).

### [Disclosure]

### [Technical Problem]

An aspect of the present disclosure provides a new letter input method capable of reducing a time required to input letters and the number of times a key button is operated.

### [Technical Solution]

According to a first aspect of the present disclosure, a method for inputting letters in a mobile terminal may be provided. The method for inputting letters may include: displaying a plurality of letter key buttons each having a plurality of letters allocated thereto and a plurality of number key buttons each having a single number allocated thereto on a touch screen in a letter input mode; sensing a touch applied to a letter key button and a number key button; and when the touches applied to a letter key button and a number key button are sensed, determining one selected letter among a plurality of letters allocated to the touched letter key button based on a number allocated to the touched number key button.

According to a second aspect of the present disclosure, a device for inputting letters in a mobile terminal may be provided. The device for inputting letters may include: a touch screen displaying a plurality of letter key buttons each having a plurality of letters allocated thereto and a plurality of number key buttons each having a single number allocated thereto in a letter input mode, sensing a touch applied to a letter key button and a number key button, and generating a touch signal; and a controller determining, when touches applied to a letter key button and a number key button are sensed through the touch signal generated by the touch screen, one selected letter among a plurality of letters allocated to the touched letter key button based on a number allocated to the touched number key button.

According to a third aspect of the present disclosure, a method for inputting letters in a mobile terminal may be provided. The method for inputting letters may include: sensing, by a key input unit, inputs applied to one of a plurality of letter key buttons each having a plurality of letters allocated thereto and one of a plurality of number key buttons each having a single number allocated thereto; and when the inputs applied to a letter key button and a number key button are sensed in a letter input mode, determining one selected letter among a plurality of letters allocated to the input letter key button based on a number allocated to the input number key button.

According to a fourth aspect of the present disclosure, a device for inputting letters in a mobile terminal may be provided. The device for inputting letters may include: a key input unit sensing inputs applied to one of a plurality of letter key buttons each having a plurality of letters allocated thereto and one of a plurality of number key buttons each having a single number allocated thereto; and a controller determining, when the inputs applied to a letter key button and a number key button are sensed in a letter input mode, one selected letter among a plurality of letters allocated to the input letter key button based on a number allocated to the input number key button.

The foregoing technical solutions do not fully enumerate all of the features of the present disclosure. The foregoing and other objects, features, aspects and advantages of the present disclosure will become more apparent from the following detailed description of the present disclosure when taken in conjunction with the accompanying drawings.

### [Advantageous Effects]

A new device and method for inputting letters capable of reducing a time required to input letters and the number of times key buttons are operated in a mobile terminal may be provided.

### [Description of Drawings]

FIG. 1 is a block diagram illustrating a configuration of a device for inputting letters in a mobile terminal according to an exemplary embodiment of the present disclosure;
FIG. 2 is a flow chart illustrating a method for inputting letters in a mobile terminal according to an exemplary embodiment of the present disclosure;
FIG. 3 is a view illustrating an example of a method for inputting English letters in a mobile terminal according to an exemplary embodiment of the present disclosure;
FIG. 4 is a view illustrating another example of a method for inputting English letters in a mobile terminal according to an exemplary embodiment of the present disclosure;
FIG. 5 is a view illustrating an example of a method for inputting Hangul in a mobile terminal according to an exemplary embodiment of the present disclosure;
FIG. 6 is a view illustrating an example of a method for inputting Japanese letters in a mobile terminal according to an exemplary embodiment of the present disclosure;
FIG. 7 is a view illustrating another example of a method for inputting Japanese letters in a mobile terminal according to an exemplary embodiment of the present disclosure;
FIG. 8 is a view illustrating an example of a method for inputting Chinese letters in a mobile terminal according to an exemplary embodiment of the present disclosure;
FIG. 9 is a view illustrating another example of a method for inputting Chinese letters in a mobile terminal according to an exemplary embodiment of the present disclosure;
FIG. 10 is a view illustrating an example of a method for inputting numbers in a mobile terminal according to an exemplary embodiment of the present disclosure;
FIG. 11 is a view illustrating an example of a method for inputting mathematical symbols in a mobile terminal according to an exemplary embodiment of the present disclosure; and
FIG. 12 is a view illustrating an example of a method for inputting various other symbols in a mobile terminal according to an exemplary embodiment of the present disclosure.

### [Best Mode]

Hereinafter, exemplary embodiments of the present disclosure will now be described in detail with reference to the accompanying drawings. In describing the present disclosure, if a detailed explanation for a related known function or construction is considered to unnecessarily divert the gist of the present disclosure, such explanation has been omitted but would be understood by those skilled in the art.

Hereinafter, a device and method for inputting letters in a mobile terminal will be described.

In the present disclosure, a mobile terminal having a touch screen will be described as an example, but the present disclosure is not limited thereto and may be applied to any device having a plurality of key buttons (namely, mechanically implemented key buttons or virtual key buttons) allowing letter input. For example, the mobile terminal according to an exemplary embodiment of the present disclosure may be an international mobile telecommunications 2000 (IMT-2000) terminal, a wideband code division multiple access (WCDMA) terminal, a global system for mobile communication/general packet ratio service (GSM/GPRS) terminal, a universal mobile telecommunications service (UMTS) terminal, a smartphone, a portable multimedia player (PMP), a personal digital assistant (PDA), an MP3 player, or the like.

In the following description, a letter key button refers to a key button to which a plurality of letters is allocated, and a number key button refers to a key button to which a single number is allocated. Here, the number key button is a key button for selecting a single letter among the letters allocated to the letter key button, rather than a key button for inputting a general number, and the number key button may be marked with a number or a symbol, an emoticon (for example, a dice), or the like, that may represent a corresponding number. A number, an emoticon, a mathematical symbol, and various other symbols, or the like, as well as a general letter, may be allocated to the letter key button.

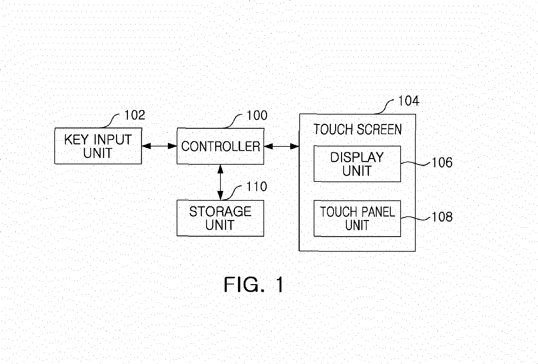

FIG. 1 is a block diagram illustrating a configuration of a device for inputting letters in a mobile terminal according to an exemplary embodiment of the present disclosure.

As illustrated in FIG. 1, a terminal includes a controller 100, a key input unit 102, a display unit 106, a touch panel unit 108, and a storage unit 110. Here, the display unit 106 may be combined with the touch panel unit 108 to constitute a touch screen 104.

Referring to FIG. 1, the controller 100 controls a general operation of the mobile terminal, and controls and processes a function for inputting letters according to the exemplary embodiment of the present disclosure.

In particular, according to the exemplary embodiment of the present disclosure, the controller 100 controls and processes a function for displaying a plurality of letter key buttons each having a plurality of letters allocated thereto and a plurality of number key buttons each having a single number allocated thereto in a letter input mode through the touch screen 104, selecting, when simultaneous touches applied to both a letter key button and a number key button are sensed through a touch signal generated from the touch screen 104, a letter in the order corresponding to the number allocated to the touched number key button from a plurality of letters allocated to the touched letter key button and inputting the selected letter.

Alternatively, according to an exemplary embodiment of the present disclosure, the controller 100 controls and processes a function for selecting, when simultaneous inputs applied to a letter key button and a number key button are sensed in the letter input mode through the key input unit 102, a letter in the order corresponding to a number allocated to the input number key button from among a plurality of letters allocated to the input letter key button, and displaying the selected letter on the screen. In this case, the key input unit 102 may include a plurality of letter key buttons each having a plurality of letters allocated thereto and a plurality of number key buttons each having a single number allocated thereto.

The key input unit 102 includes a plurality of number key buttons, letter key buttons, and function key buttons, and provides data corresponding to a key button pressed by the user to the controller 100. According to an exemplary embodiment of the present disclosure, in case of a mobile terminal entirely and solely operated through the touch panel unit 108, the key input unit 102 may be omitted.

The display unit 106 may be configured as a liquid crystal display (LCD), and displays state information generated during an operation and limited numbers and letters. According to an exemplary embodiment of the present disclosure, the display unit 106 displays a plurality of letter key buttons each having a plurality of letters and a plurality of number key buttons each having a single number allocated thereto on the screen in the letter input mode.

The touch panel unit 108 may be formed as at least one touch sensor, and receives a user touch. The touch sensor generates a touch signal upon sensing a user touch and delivers the generated touch signal to the controller 100. The touch sensor may be configured as a touch sensor such as a capacitive overlay-type touch sensor, a resistive overlay-type touch sensor, an infrared beam-type touch sensor, or the like, or may also be configured as a pressure sensor. According to an exemplary embodiment of the present disclosure, in case of a mobile terminal entirely and solely operated only with the key input unit 102, the touch panel unit 108 may be omitted.

The storage unit 110 may store programs for a general operation of the mobile terminal and various data. According to an exemplary embodiment of the present disclosure, the storage unit 110 may store a plurality of letters allocated to a plurality of letter key buttons, sequential order thereof, and numbers allocated to a plurality of number key buttons, while also storing functions allocated to a double-touched letter key button or number key button.

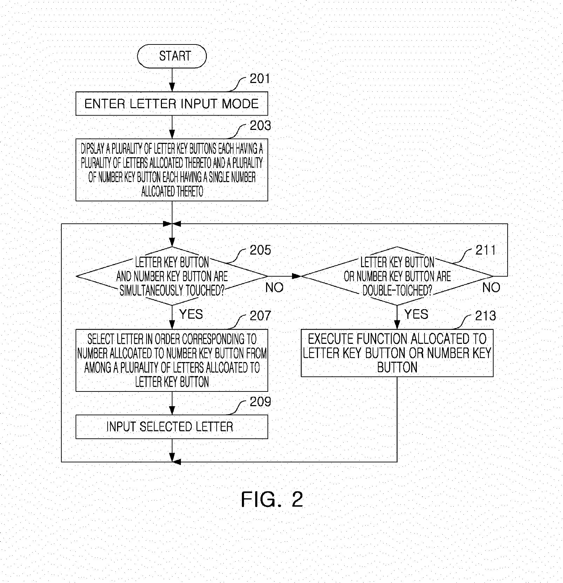

FIG. 2 is a flow chart illustrating a method for inputting letters in a mobile terminal according to an exemplary embodiment of the present disclosure.

Referring to FIG. 2, the terminal enters the letter input mode according to a user key button operation in operation 201.

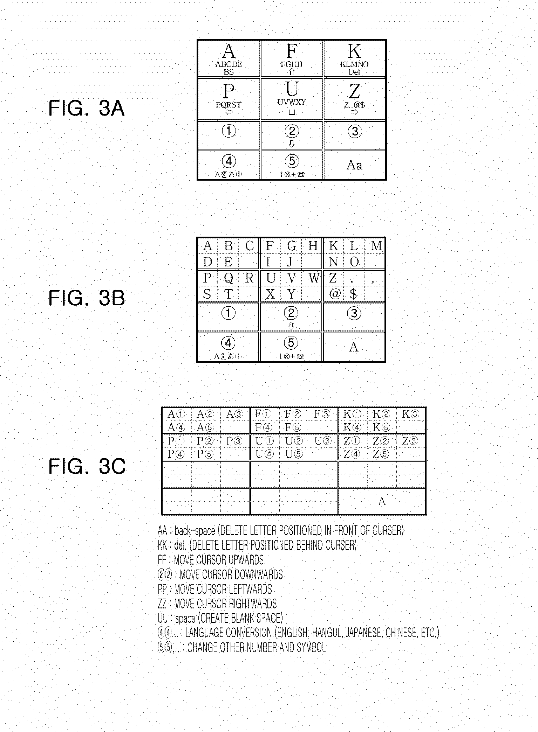

Thereafter, the terminal displays a plurality of letter key buttons each having a plurality of letters allocated thereto and a plurality of number key buttons each having a single number allocated thereto on the screen in the letter input mode in operation 203. A plurality of letters allocated to a single letter key button have a sequential order, and numbers from 1 (to a number of letters allocated to a single letter key button) are respectively allocated to each of the plurality of number key buttons. For example, as illustrated in FIG. 3, in a case in which the number of letters allocated to a single letter key button is "5", numbers from 1 to 5 may be respectively allocated to each single number key button, and alphabet letters A, B, C, D, and E may be allocated to a single letter key button in alphabetical order. With respect to the other letters, five letters may be allocated to each single letter key button in alphabetical order, in the same manner.

Thereafter, the terminal determines whether simultaneous touches applied to a single letter key button and a single number key button are sensed in operation 205. In this case, the terminal may sense a touchdown with respect to a number key button in a state in which a touchdown with respect to a letter key button is sensed, or sense a touchdown with respect to a letter key button in a state in which a touchdown with respect to a number key button is sensed, and subsequently sense touchup with respect to the touchdown-sensed letter key button and the touchdown-sensed number key button, thus sensing the simultaneous touches.

When simultaneous touches with respect to a single letter key button and a single number key button are sensed in operation 205, the terminal determines that a letter in the order corresponding to the number allocated to the touched number key button from among the plurality of letters allocated to the touched letter key button is a selected letter in operation 207. Namely, when the user selects letters desired to be input by applying touches to a single letter key button and a single number key button, respectively, the terminal determines what the selected letter is. For example, as illustrated in FIG. 3, when simultaneous touches applied to a letter key button having letters A, B, C, D, and E allocated thereto and a number key button having the number 2 allocated thereto are sensed, the terminal may select the letter B which is listed second among the letters A, B, C, D, and E. In another exemplary embodiment, when sequential touches applied to a single letter key button and a single number key button are sensed within a predetermined period of time, the terminal may select a letter in the order corresponding to the number allocated to the touched number key button from among the plurality of letters allocated to the touched letter key button.

Thereafter, the terminal inputs the selected letter to the screen in operation 209, and returns to operation 205 to repeatedly perform the subsequent operations.

Meanwhile, when simultaneous touches with respect to a single letter key button and a single number key button are not sensed in operation 205, the terminal determines whether double touches applied to a single letter key button or a single number key button are sensed in operation 211. Here, the terminal may sense the double touches by sensing two continuous touches applied to a single letter key button or a single number key button within a predetermined period of time.

When double touches applied to a single letter key button or a single number key button are sensed in operation 211, the terminal performs a function allocated to the double-touched letter key button or number key button in operation 213, and returns to operation 205 to repeatedly perform the subsequent operations. Here, the function allocated to the double-touched letter key button or number key button may include at least one of a back-space function of deleting a letter positioned in front of a cursor, a delete function of deleting a letter positioned behind a cursor, a function of moving a cursor upwards, a function of moving the cursor downwards, a function of moving the cursor leftwards, a function of moving the cursor rightwards, a space function of creating a blank space, a function of changing a language (for example, English, Hangul(Korean), Japanese, Chinese, or the like) mode, and any other mode (for example, number, emoticon, mathematical symbol, and various other symbols, and the like). For example, as illustrated in FIG. 3, in a case in which double touches applied to the letter key button having the letters A, B, C, D, and E allocated thereto is sensed, the terminal may execute the back-space function, and in a case in which double touches applied to the number key button having the number 2 allocated thereto are sensed, the terminal may execute the function of moving the cursor downwards.

Meanwhile, when double touches with respect to a single letter key button and a single number key button are not sensed in operation 211, the terminal may return to operation 205 to repeatedly perform the subsequent operations.

Meanwhile, FIG. 2 illustrates a method of inputting a letter by using a virtual key button displayed on the touch screen according to the exemplary embodiment of the present disclosure, but alternatively, a letter may be input by using a mechanical key button provided in the mobile terminal according to an exemplary embodiment of the present disclosure. In this case, the keypad of the terminal may include a plurality of letter key buttons each having a plurality of letters allocated thereto and a plurality of number key buttons each having a single number allocated thereto. Here, a plurality of letters allocated to a single letter key button have a sequential order. Numbers from 1 (to a number of letters allocated to a single letter key button) are respectively allocated to each of the plurality of number key buttons.

In a case in which simultaneous inputs applied to a single letter key button and a single number key button are sensed in the letter input mode, the terminal selects a letter in the order corresponding to a number allocated to the input number key button, from among a plurality of letters allocated to the input letter key button, and displays the selected letter on the screen. Here, the terminal may sense the simultaneous inputs by sensing the input applied to the number key button in a state in which the input applied to the letter key button is sensed, or by sensing the input applied to the letter key button in a state in which the input applied to the number key button is sensed. In another exemplary embodiment, when sequential inputs applied to a single letter key button and a single number key button are sensed within a predetermined period of time, the terminal may select a letter in the order corresponding to the number allocated to the input number key button, from among the plurality of letters allocated to the input letter key button.

Also, in a case in which double inputs applied to a single letter key button or a single number key button are sensed in the letter input mode, the terminal may execute a function allocated to the double-input letter key button or number key button. Here, the terminal may sense the double inputs by sensing two continuous inputs applied to a single letter key button or a single number key button within a predetermined period of time.

FIG. 3 is a view illustrating an example of a method for inputting English letters in a mobile terminal according to an exemplary embodiment of the present disclosure.

Referring to FIG. 3, first, FIG. 3(a) illustrates a 3x4 English letter keypad according to an exemplary embodiment of the present disclosure. The 3x4 English letter keypad includes a plurality of letter key buttons ("A", "F", "K", "P", "U", and "Z" in FIG. 3(a)), a plurality of number key buttons ("①", "②", "③", "④", and "⑤" in FIG. 3(a)), and a key button ("Aa") for changing upper case/lower case. Here, in a case in which the number of letters allocated to a single letter key button is "5", numbers from 1 to 5 may be respectively allocated to each single number key button, and letters A, B, C, D, and E may be allocated to a single letter key button (key button "A" in FIG. 3(a)) in alphabetical order. With respect to the other letters, each of the five letters may be allocated to each single letter key button in alphabetical order in the same manner. Here, the plurality of letters allocated to each letter key button have a sequential order, as illustrated in FIG. 3(b).

FIG. 3(c) illustrates combinations of a letter key button and a number key button to selectively input one of letters allocated to each letter key button. For example, when simultaneous touches applied to the letter key button having the letters A, B, C, D, and E allocated thereto and the number key button having the number 2 allocated thereto are sensed in the letter input mode, the terminal may selectively input the letter B listed second among the letters A, B, C, D, and E. Alternatively, in a state in which a touch is applied to the letter key button having the letters A, B, C, D, and E allocated thereto, when touches applied to the number key buttons each having the numbers 1, 2, 3, 4, and 5, respectively, are sequentially sensed, the terminal may sequentially and selectively input the letters A, B, C, D, and E. When this English letter keypad and letter input scheme is applied, the terminal may input thirty letters with a total of eleven letter key buttons and number key buttons.

A single function may be allocated to each of the plurality of letter key buttons and number key buttons, and each function may be executed by applying double touches to a corresponding key button. Here, the function allocated to the letter key buttons or number key buttons may include at least one of a back-space function of deleting a letter positioned in front of a cursor, a delete function of deleting a letter positioned behind a cursor, a function of moving a cursor upwards, a function of moving the cursor downwards, a function of moving the cursor leftwards, a function of moving the cursor rightwards, a space function of creating a blank space, a function of changing a language (for example, English, Hangul, Japanese, Chinese, or the like) mode, and any other mode (for example, number, emoticon, mathematical symbol, and various other symbols, and the like). For example, as illustrated in FIG. 3, in a case in which double touches applied to the letter key button having the letters A, B, C, D, and E allocated thereto is sensed, the terminal may execute the back-space function, and in a case in which double touches applied to the number key button having the number 2 allocated thereto are sensed, the terminal may execute the function of moving the cursor downwards. Also, when double touches applied to a number key button having the number 4 allocated thereto are sensed, the terminal may execute a function of changing a language mode. If a current language mode of the keypad is English, the language mode may be changed to Hangul by applying double touches to the number key button having the number 4 allocated thereto, and in this state, when a continuous additional touch applied to the number key button having the number 4 allocated thereto is sensed within a predetermined period of time, the language mode may be changed again to Japanese, Chinese, or the like. Also, when double touches applied to a number key button having the number 5 allocated thereto are sensed, the terminal may execute a function of changing other modes. If a current mode of the keypad is number, the mode may be changed to emoticon by applying double touches to the number key button having the number 5 allocated thereto, and in this state, when a continuous additional touch applied to the number key button having the number 5 allocated thereto is sensed within a predetermined period of time, the mode may be changed again to mathematical symbols and various other symbols, or the like.

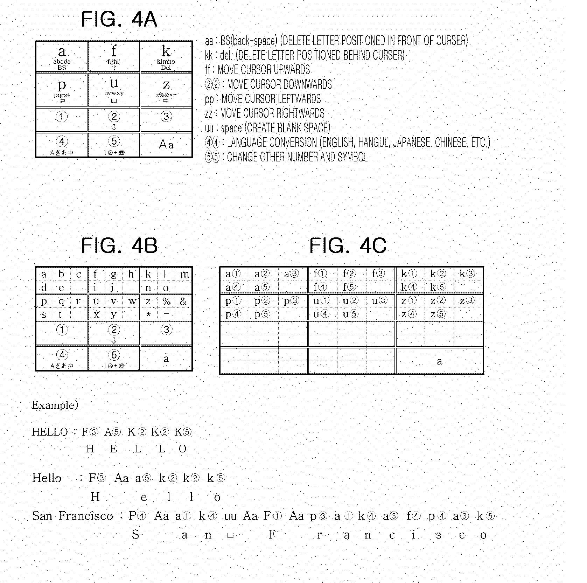

In the 3x4 English letter keypad, a mode may be changed from upper case to lower case through a key button for changing upper case/lower case as illustrated in FIG. 4(a). Here, FIG. 4(b) illustrates a plurality of lowercase letters allocated to respective letter key buttons in sequential order, and FIG. 4(c) illustrates combinations of a letter key button and a number key button for selectively inputting one of lowercase letters allocated to respective letter key buttons. Also, in the lowercase letters, similarly, when simultaneous touches applied to a letter key button having the letters a, b, c, d, and e allocated thereto and a number key button having the number 2 allocated thereto are sensed, the terminal may selectively input the letter b listed second among the letters a, b, c, d, and e, and when double touches applied to the letter key button having the letters a, b, c, d, and e allocated thereto are sensed, the terminal may execute a back-space function.

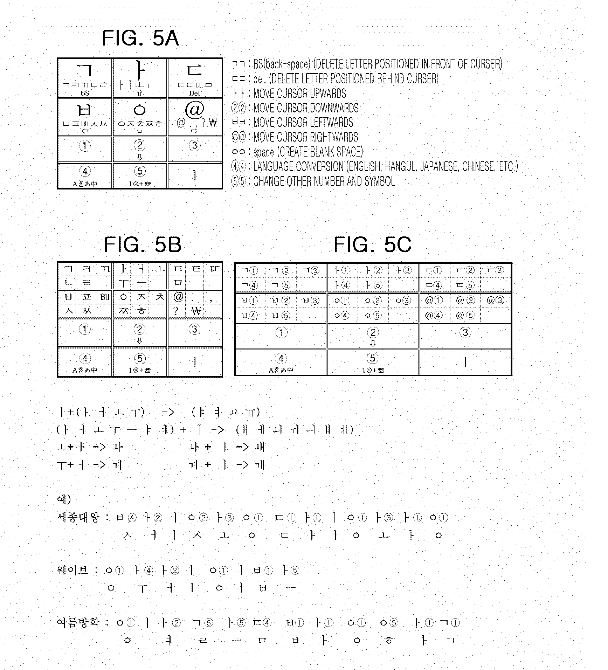

FIG. 5 is a view illustrating an example of a method for inputting Hangul in a mobile terminal according to an exemplary embodiment of the present disclosure.

Referring to FIG. 5, FIG. 5(a) illustrates a 3x4 Hangul keypad according to an exemplary embodiment of the present disclosure. The 3x4 Hangul keypad includes a plurality of letter key buttons 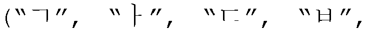 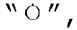 and "@" in FIG. 5(a)), a plurality of number key buttons ("①", "②",, "③", "④", and "⑤" in FIG. 5(a)), and a key button ( 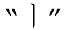 in FIG. 5(a)) for adding a stroke. Here, in a case in which the number of letters allocated to a single letter key button is "5", numbers from 1 to 5 may be respectively allocated to each single number key button, and letters 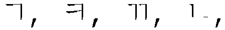 and 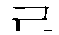 may be allocated to a single letter key button (key button 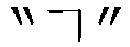 in FIG. 5(a)) in sequential order. With respect to the other letters, each of the five letters may be respectively allocated to each single letter key button in sequential order in the same manner.

The letter input scheme using the English keypad illustrated in FIGS. 3 and 4 may be applied as a letter input scheme using the Hangul keypad in the same manner. Namely, the terminal may sense simultaneous touches applied to a single letter key button and a single number key button and selectively input a letter in the order corresponding to the number allocated to the touched number key button, among the plurality of letters allocated to the touched letter key button. Also, the terminal may sense double touches applied to a single letter key button or a single number key button and execute a function allocated to the double-touched letter key button or number key button.

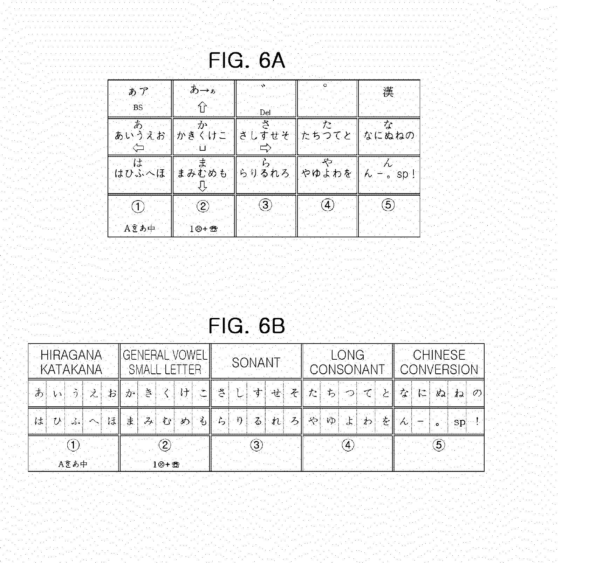

FIG. 6 is a view illustrating an example of a method for inputting Japanese letters in a mobile terminal according to an exemplary embodiment of the present disclosure.

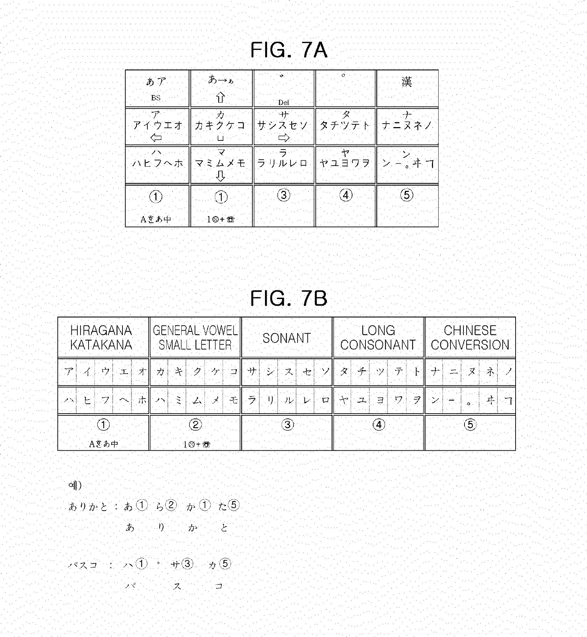

Referring to FIG. 6, FIG. 6(a) illustrates a 5x4 Japanese keypad according to an exemplary embodiment of the present disclosure. The 5x4 Japanese keypad includes a plurality of letter key buttons ( 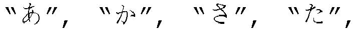 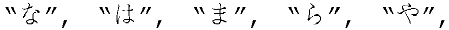 and 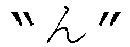 in FIG. 6(a)), a plurality of number key buttons ("①", "②", "③", "④", and "⑤" in FIG. 6(a)), a key button ( 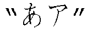 in FIG. 6(a)) for changing Hiragana/Katakana, a key button ( 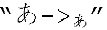 in FIG. 6(a)) for changing to a contracted sound (small letter), a key button ("^{..}" in FIG. 6(a)) for changing to sonant (voiced sound), a key button ("°" in FIG. 6(a)) for changing to a double (long) consonant, and a key button ( 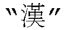 in FIG. 6(a)) for changing to Chinese. Here, in a case in which the number of letters allocated to a single letter key button is "5", numbers from 1 to 5 may be respectively allocated to each single number key button, and letters 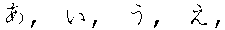 and 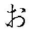 may be allocated to a single letter key button (key button 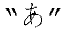 in FIG. 6(a)) in Hiragana order. With respect to the other letters, each of the five letters may be allocated to each single letter key button in sequential order in the same manner. In the 5x4 Japanese keypad, a mode may be changed from Hiragana to Katakana through a key button for changing Hiragana/Katakana, as illustrated in FIG. 7(a).

The letter input scheme using the English keypad illustrated in FIGS. 3 and 4 may be applied as a letter input scheme using the Japanese keypad in the same manner. Namely, the terminal may sense simultaneous touches applied to a single letter key button and a single number key button and selectively input a letter in the order corresponding to the number allocated to the touched number key button, among the plurality of letters allocated to the touched letter key button. Also, the terminal may sense double touches applied to a single letter key button or a single number key button and execute a function allocated to the double-touched letter key button or number key button.

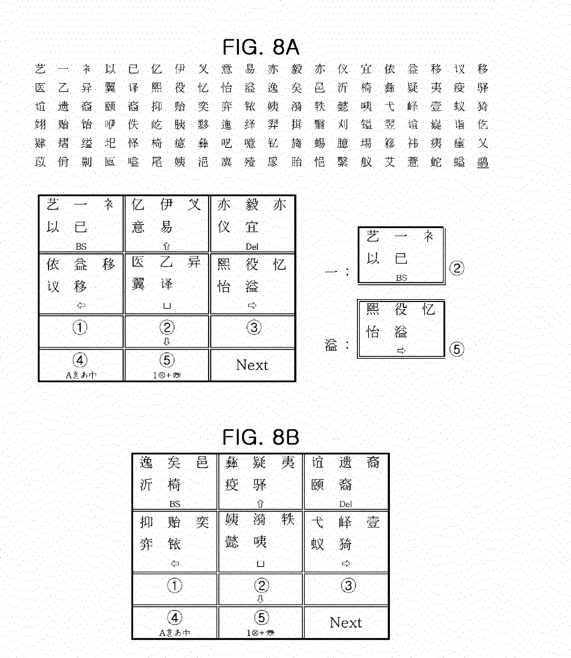

FIG. 8 is a view illustrating an example of a method for inputting Chinese letters in a mobile terminal according to an exemplary embodiment of the present disclosure.

Referring to FIG. 8, when a user inputs Chinese letters desired to be input according to their English pronunciation (namely, as the Chinese letters are pronounced in English) in the letter input mode, the terminal may search Chinese letters corresponding to the English pronunciation inputs and display the same on the screen, and convert the English pronunciation inputs into one selected Chinese letter, when one of the Chinese letters is selected. For example, when yi is input, the terminal may search a plurality of Chinese letters corresponding thereto and display the same on the screen. Here, the plurality of searched Chinese letters may be displayed in a 3x4 Chinese keypad as illustrated in FIG. 8(a) according to the exemplary embodiment of the present disclosure.

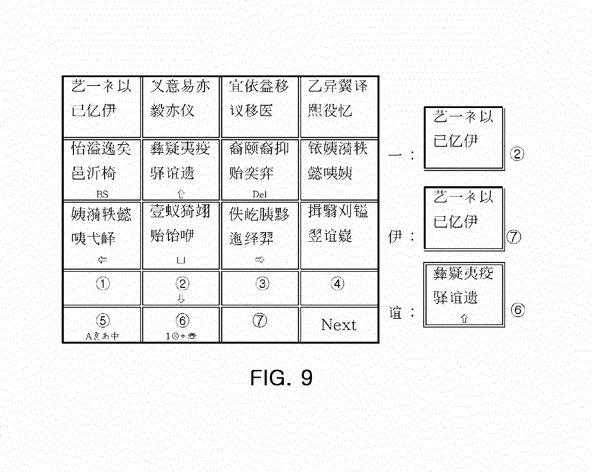

The 3x4 Chinese keypad includes a plurality of letter key buttons, a plurality of number key buttons ("①", "②", "③", "④", and "⑤" in FIG. 8(a)), and a key button ("Next" in FIG. 8(a)) for displaying a plurality of following letter key buttons. Here, in a case in which the number of letters allocated to a single letter key button is "5", numbers from 1 to 5 may be respectively allocated to each single number key button, and five letters among the plurality of searched Chinese letters may be allocated to a single letter key button in sequential order. With respect to a plurality of the other searched letters, each of the five letters may be allocated to each single letter key button in sequential order in the same manner. In this case, for efficiency of selection, the Chinese letters may be arranged by a total number of strokes or by radicals. In a case in which a large number of Chinese letters are searched, all of the searched Chinese letters may not be displayed in the 3x4 Chinese keypad, so a new 3x4 Chinese keypad may be displayed through the key button "Next" as illustrated in FIG. 8(b) to display the other Chinese letters which have not been displayed through the 3x4 Chinese keypad of FIG. 8(a). In another exemplary embodiment, in order to display a larger number of Chinese letters at a time, a 4x5 Chinese keypad as illustrated in FIG. 9 may be used.

The letter input scheme using the English keypad illustrated in FIGS. 3 and 4 may be applied as a letter input scheme using the Chinese keypad in the same manner. Namely, the terminal may sense simultaneous touches applied to a single letter key button and a single number key button and selectively input a letter in the order corresponding to the number allocated to the touched number key button, among the plurality of letters allocated to the touched letter key button. Also, the terminal may sense double touches applied to a single letter key button or a single number key button and execute a function allocated to the double-touched letter key button or number key button.

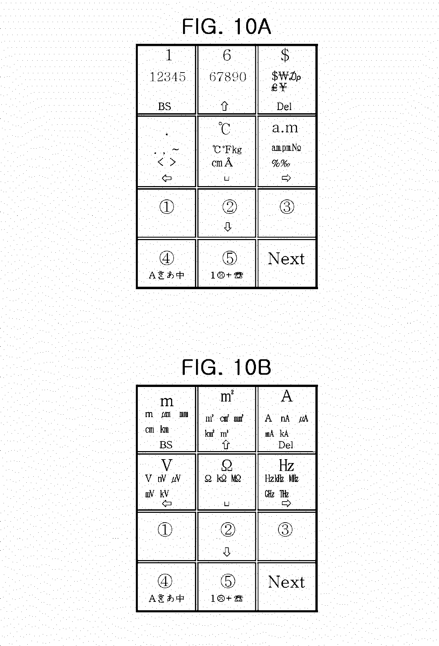

FIG. 10 is a view illustrating an example of a method for inputting numbers in a mobile terminal according to an exemplary embodiment of the present disclosure.

Referring to FIG. 10, FIG. 10(a) illustrates a 3x4 number keypad according to an exemplary embodiment of the present disclosure. The 3x4 number keypad includes a plurality of letter key buttons ("1", "6", "$", ".", "°C", and "a.m." in FIG. 10(a)), a plurality of number key buttons ("①", "②", "③", "④", and "⑤" in FIG. 10(a)), and a key button ("Next" in FIG. 10(a)) for displaying a plurality of following letter key buttons.

Here, in a case in which the number of letters allocated to a single letter key button is "5", numbers from 1 to 5 may be respectively allocated to each single number key button, and numbers 1, 2, 3, 4, and 5 may be allocated to a single letter key button in sequential order. Numbers 6, 7, 8, 9, and 0 may be allocated to a single letter key button in sequential order in the same manner, and with respect to various units related to numbers, five letters may be allocated to a single letter key button in sequential order. Also, a new 3x4 number keypad as illustrated in FIG. 10(b) may be displayed through the key button "Next" to display the other letters which have not been displayed in the 3x4 number keypad of FIG. 10(a).

The letter input scheme using the English keypad illustrated in FIGS. 3 and 4 may be applied as a letter input scheme using the number keypad in the same manner. Namely, the terminal may sense simultaneous touches applied to a single letter key button and a single number key button and selectively input a letter in the order corresponding to the number allocated to the touched number key button, among the plurality of letters allocated to the touched letter key button. Also, the terminal may sense double touches applied to a single letter key button or a single number key button and execute a function allocated to the double-touched letter key button or number key button.

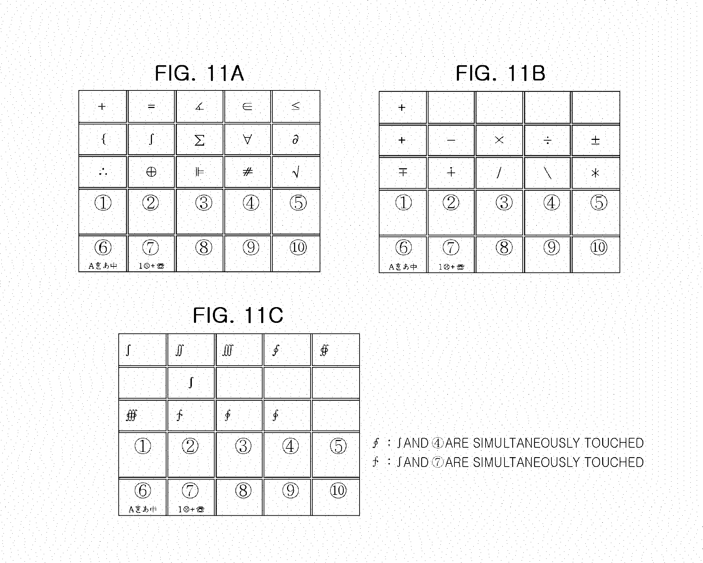

FIG. 11 is a view illustrating an example of a method for inputting mathematical symbols in a mobile terminal according to an exemplary embodiment of the present disclosure.

Referring to FIG. 11, FIG. 11 (a) illustrates a 5x5 mathematical symbol keypad according to an exemplary embodiment of the present disclosure. The 5x5 mathematical symbol keypad includes a plurality of letter key buttons "+", "=", 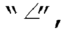 "∈", "≤", "{", 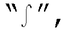 "Σ", "∀", "∂", 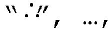 "√" in FIG. 11(a)) and a plurality of number key buttons ("①", "②", "③", "④", "⑤", "⑥", "⑦", "⑧", "⑨", and "⑩" in FIG. 11(a)). Here, in a case in which the number of letters allocated to a single letter key button is "10", numbers from 1 to 10 may be respectively allocated to each single number key button, and ten mathematical symbol including "+ ", "-", "×", "÷", "±", ..., "*" may be allocated to a single letter key button (key button "+" in FIG. 11(a)) in sequential order. With respect to the other mathematical symbols, each of the ten mathematical symbol may be allocated to each single letter key button in sequential order in the same manner.

The letter input scheme using the English keypad illustrated in FIGS. 3 and 4 may be applied as a letter input scheme using the mathematical symbol keypad in the same manner. Namely, the terminal may sense simultaneous touches applied to a single letter key button and a single number key button and selectively input a letter in the order corresponding to the number allocated to the touched number key button, among the plurality of letters allocated to the touched letter key button. Here, as illustrated in FIGS. 11(b) and 11(c), instead of the letter key buttons other than a touched letter key button, a plurality of letters allocated to the touched letter key button may be displayed to allow the user to check the plurality of letters allocated to the touched letter key button and select one of the plurality of letters by applying a touch to a single number key button. Also, the terminal may sense double touches applied to a single letter key button or a single number key button and execute a function allocated to the double-touched letter key button or number key button.

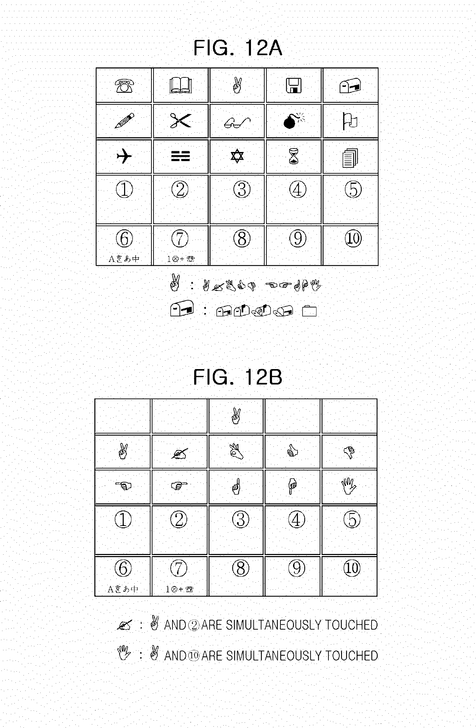

FIG. 12 is a view illustrating an example of a method for inputting various other symbols in a mobile terminal according to an exemplary embodiment of the present disclosure.

Referring to FIG. 12, FIG. 12(a) illustrates a 5x5 symbol keypad according to an exemplary embodiment of the present disclosure. The 5x5 symbol keypad includes a plurality of letter key buttons and a plurality of number key buttons ("①", "②", "③", "④", "⑤", "⑥", "⑦", "⑧", "⑨", and "⑩" in FIG. 12(a)). Here, in a case in which the number of letters allocated to a single letter key button is "10", numbers from 1 to 10 may be respectively allocated to each single number key button, and ten various symbols may be allocated to a single letter key button in sequential order. With respect to the other symbols, ten symbols may be allocated to each single letter key button in sequential order in the same manner.

The letter input scheme using the English keypad illustrated in FIGS. 3 and 4 may be applied as a letter input scheme using the symbol keypad in the same manner. Namely, the terminal may sense simultaneous touches applied to a single letter key button and a single number key button and selectively input a letter in the order corresponding to the number allocated to the touched number key button, among the plurality of letters allocated to the touched letter key button. Here, as illustrated in FIG. 12(b), instead of letter key buttons other than a touched letter key button (symbol key button having a finger shape in FIG. 12(a)), a plurality of letters (symbols having various finger shapes) allocated to the touched letter key button may be displayed to allow the user to check the plurality of letters allocated to the touched letter key button and select one of the plurality of letters by applying a touch to a single number key button. Also, the terminal may sense double touches applied to a single letter key button or a single number key button and execute a function allocated to the double-touched letter key button or number key button.

While exemplary embodiments have been shown and described above, it will be apparent to those skilled in the art that modifications and variations could be made without departing from the spirit and scope of the present disclosure as defined by the appended claims.

## Claims

1. A method for inputting letters in a mobile terminal, the method comprising:
displaying a plurality of letter key buttons each having a plurality of letters allocated thereto and a plurality of number key buttons each having a single number allocated thereto on a touch screen in a letter input mode;
sensing a touch applied to a letter key button and a number key button; and
when the touches applied to a letter key button and a number key button are sensed, determining one selected letter among a plurality of letters allocated to the touched letter key button based on a number allocated to the touched number key button.

2. The method of claim 1, wherein a plurality of letters allocated to a single letter key button have a sequential order, and
in determining the one selected letter, a letter in an order corresponding to the number allocated to the touched number key button, among a plurality of letters allocated to the touched letter key button, is determined.

3. The method of claim 1, wherein the sensing of an applied touch comprises:
sensing a touchdown applied to a number key button in a state in which a touchdown applied to a letter key button is sensed, or sensing a touchdown applied to a letter key button in a state in which a touchdown applied to a number key button is sensed; and
sensing a touchup applied to the touchdown-sensed letter key button and the touchdown-sensed number key button.

4. The method of claim 1, wherein numbers from 1 to a number of letters allocated to a single letter key button are respectively allocated to the plurality of number key buttons.

5. The method of claim 4, wherein the number of letters allocated to a single letter key button is "5".

6. The method of claim 1, further comprising:
the touch screen sensing double touches applied to a letter key button or a number key button; and
when double touches applied to a letter key button or a number key button are sensed, executing a function allocated to the double-touched letter key button or number key button.

7. The method of claim 6, wherein the function allocated to the double-touched letter key button or number key button comprises at least one of a back-space function, a delete function, a cursor movement function, a space function, and a language conversion function.

8. A device for inputting letters in a mobile terminal, the device comprising:
a touch screen displaying a plurality of letter key buttons each having a plurality of letters allocated thereto and a plurality of number key buttons each having a single number allocated thereto in a letter input mode, sensing a touch applied to a letter key button and a number key button, and generating a touch signal; and
a controller determining, when touches applied to a letter key button and a number key button are sensed through the touch signal generated by the touch screen, one selected letter among a plurality of letters allocated to the touched letter key button based on a number allocated to the touched number key button.

9. The device of claim 8, wherein a plurality of letters allocated to a single letter key button have a sequential order, and the controller determines a letter in an order corresponding to the number allocated to the touched number key button among a plurality of letters allocated to the touched letter key button.

10. The device of claim 8, wherein the touch screen senses a touchdown applied to a number key button in a state in which a touchdown applied to a letter key button is sensed, or senses a touchdown applied to a letter key button in a state in which a touchdown applied to a number key button is sensed, and senses a touchup applied to the touchdown-sensed letter key button and the touchdown-sensed number key button.

11. The device of claim 8, wherein numbers from 1 to a number of letters allocated to a single letter key button are respectively allocated to the plurality of number key buttons.

12. The device of claim 11, wherein the number of letters allocated to a single letter key button is "5".

13. The device of claim 8, wherein the touch screen senses double touches applied to a letter key button or a number key button, and when double touches applied to a letter key button or a number key button are sensed, the controller executes a function allocated to the double-touched letter key button or number key button.

14. The device of claim 13, wherein the function allocated to the double-touched letter key button or number key button comprises at least one of a back-space function, a delete function, a cursor movement function, a space function, and a language conversion function.

15. A method for inputting letters in a mobile terminal, the method comprising:
sensing, by a key input unit, inputs applied to one of a plurality of letter key buttons each having a plurality of letters allocated thereto and one of a plurality of number key buttons each having a single number allocated thereto; and
when the inputs applied to a letter key button and a number key button are sensed in a letter input mode, determining one selected letter among a plurality of letters allocated to the input letter key button based on a number allocated to the input number key button.

16. A device for inputting letters in a mobile terminal, the device comprising:
a key input unit sensing inputs applied to one of a plurality of letter key buttons each having a plurality of letters allocated thereto and one of a plurality of number key buttons each having a single number allocated thereto; and
a controller determining, when the inputs applied to a letter key button and a number key button are sensed in a letter input mode, one selected letter among a plurality of letters allocated to the input letter key button based on a number allocated to the input number key button.
